# EUROPÄISCHE PATENTSCHRIFT

(11) **EP 3 167 776 B1**
(45) Veröffentlichungstag und Bekanntmachung des Hinweises auf die Patenterteilung: **19.02.2020**
(21) Anmeldenummer: 16190285.3
(22) Anmeldetag: 23.09.2016
(51) Int. Cl.: A47J 31/44, A47J 31/42

(54) **KAFFEEVOLLAUTOMAT MIT UMLAUFRÄDERGETRIEBE**
FULLY AUTOMATIC COFFEE MACHINE HAVING IMPELLER DRIVES
MACHINE À CAFÉ ÉQUIPÉE D'UN TRAIN ÉPICYCLOÏDAL

(30) Priorität: 16.11.2015 DE 102015222555
(43) Veröffentlichungstag der Anmeldung: 17.05.2017
(73) Patentinhaber: BSH Hausgeräte GmbH, 81739 München (DE)
(72) Erfinder: Hauser, Andreas, 83026 Rosenheim (DE); Quandt, Christian, 83301 Traunreut (DE); Huber, Michael, 6341 Ebbs (AT); Schmid, Ines, 83362 Surberg/Lauter (DE)

(56) Entgegenhaltungen:
- EP-A1- 2 215 941
- EP-A1- 2 893 856
- DE-A1- 10 116 828

## Beschreibung

Die Erfindung betrifft einen Kaffeevollautomaten für Haushaltszwecke mit einer Brüheinheit als einem ersten Verbraucher und mit mindestens einem weiteren Verbraucher, mit einem Motor zum mechanischen Antrieb der Verbraucher und mit einem Umlaufrädergetriebe zum Verteilen der Antriebsenergie des Motors auf die Verbraucher.

Die DE 10116828 A1 beschreibt eine Kaffeemaschine, insbesondere für den gewerblichen Bereich, mit einer Antriebseinrichtung zum Antreiben von Pumpeinrichtungen, Fördereinrichtungen, Kaffeemühlen oder dergleichen anzutreibenden Aggregaten, wobei die Antriebseinrichtung einen Antriebsmotor sowie Getriebeeinrichtungen umfasst, welche derart ausgebildet und mit mindestens zwei Aggregaten zu deren Antrieb verbunden sind, dass die Aggregate in Abhängigkeit vom Zustand einer Steuerung wahlweise antreibbar sind. Die Auswahl der anzutreibenden Aggregate erfolgt dabei überwiegend über eine Änderung der Drehrichtung des Motors. Weitere Stand der Technik Dokumente in diesem technischen Gebiet sind bspw. EP 2 893 856 A1 und EP 2 215 941 A1.

Aufgabe der Erfindung ist es, bei der Auswahl der anzutreibenden Aggregate eine größere konstruktive Freiheit zu bieten.

Diese Aufgabe wird bei einem Kaffeevollautomaten für Haushaltszwecke mit einer Brüheinheit als einem ersten Aggregat, mit mindestens einem weiteren Aggregat, mit einem hinsichtlich seiner Drehrichtung ansteuerbaren Motor und mit einem Umlaufrädergetriebe zum Verteilen der Antriebsenergie des Motors auf die Aggregate mit genau einem Getriebeeingang und mindestens zwei Getriebeausgängen des Umlaufrädergetriebes dadurch gelöst, dass dessen Getriebeeingang starr mit einer einzigen Welle des Motors und dessen Getriebeausgänge jeweils mit einem Aggregat gekoppelt sind. Das Umlaufrädergetriebe wird also als Verteilergetriebe betrieben, bei dem eine angetriebene Welle als Getriebeeingang zwei oder mehrere Getriebeausgänge antreibt. Erfindungsgemäß kommt mit dem Umlaufrädergetriebe ein Zahnradgetriebe zum Einsatz, das neben gestellfesten Wellen auch Achsen besitzt, die auf Kreisbahnen in einem Gestell umlaufen können. Umlaufrädergetriebe bieten mehrere Getriebeausgänge, die zum Teil unterschiedliche Drehrichtungen bieten. Bei Planetengetrieben liegen der Getriebeeingang und die Getriebeausgänge auf zueinander parallelen Achsen bzw. Wellen, bei Differentialgetrieben dagegen können Achsen bzw. Wellen von Getriebeeingang und Getriebeausgängen in einem in der Regel rechten Winkel zueinander stehen. Als Aggregat kommt in einem Kaffeevollautomaten neben einer Brüheinheit vorzugsweise ein Mahlwerk in Betracht. Die konstruktive Herausforderung beim Antrieb dieser beiden oder weiterer Aggregate besteht darin, dass die Brüheinheit für ihre Aufwärts- und Abwärtsbewegung regelmäßig zwei Drehrichtungen ihres Antriebs erfordert, während ein Mahlwerk und viele weitere Aggregate häufig in nur einer Drehrichtung betrieben werden. Es wird im Allgemeinen ein Elektromotor verbaut, dessen Drehrichtung mit Hilfe einer Steuerungseinrichtung veränderbar ist.

Die Erfindung macht sich nun den Umstand zunutze, dass das Umlaufrädergetriebe als Verteilergetriebe an einem Getriebeausgang verzögert oder gesperrt werden kann, wobei die Antriebsleistung dann an dem anderen Getriebeausgang oder den anderen Getriebeausgängen zur Verfügung steht. Damit kann eine Auswahl derjenigen Aggregate vorgenommen werden, die angetrieben werden sollen, ohne den Motor zu blockieren. Denn erfindungsgemäß ist der Getriebeeingang des Umlaufrädergetriebes starr, also ohne Zwischenschaltung von Kupplungen oder dergleichen mit der einzigen Welle des Motors verbunden.

Die Erfindung nutzt zusätzlich den Umstand der unterschiedlichen Antriebscharakteristiken der Aggregate: da die Brüheinheit eine Aufwärts- und eine Abwärtsrichtung kennt, deren Bewegungen begrenzt sind, kann sie an ihren jeweiligen Umkehrpunkten jeweils einen Anschlag bieten. Er kann die Bewegung der Brüheinheit am Ende des Bewegungswegs in jede Richtung stoppen, womit die Antriebsenergie des Motors über das Umlaufrädergetriebe den anderen Aggregaten bzw. dem anderen Aggregat zukommt. Damit erübrigt die Erfindung eine Kupplung, Bremse, Sperre oder dergleichen, um eine Auswahl eines angetriebenen bzw. eines nicht angetriebenen Aggregats zu ermöglichen. Mit Wegfall einer Kupplung, Bremse, Sperre oder dergleichen vereinfacht sich der Aufbau des Kaffeevollautomaten.

Die motorseitig angetriebenen Bewegungsabläufe innerhalb eines Kaffeevollautomaten sind jedoch derart vielfältig, dass deren Steuerung allein mit den Anschlägen der Brüheinheit kaum zu bewerkstelligen ist. Nach einer vorteilhaften Ausgestaltung der Erfindung kann der Kaffeevollautomat daher über einen abtriebsseitigen Freilauf zwischen dem Umlaufrädergetriebe und zumindest einem Aggregat verfügen. Als Freilauf bzw. Einrichtungs-Gesperre ist eine Vorrichtung zu verstehen, die einen Abtriebsstrang von der Drehbewegung eines Antriebsstrangs durch Blockieren entkoppelt, wenn sich die Drehrichtung des Antriebsstrangs ändert. In einer ersten Drehrichtung des Antriebsstrangs entkoppelt und blockiert also der Freilauf den Abtriebsstrang, so dass ein dahinterliegendes Aggregat kein Antriebsmoment erhält. In der entgegengesetzten anderen Drehrichtung dagegen stellt der Freilauf eine Drehmomentenverbindung zwischen Antriebs- und Abtriebsstrang her, so dass der Abtriebsstrang in dieser Drehrichtung drehmomentenfest mit dem Antriebsstrang gekoppelt ist. Der Freilauf ist dem weiteren Aggregat, vorzugsweise dem Mahlwerk vorgelagert, so dass es drehrichtungsabhängig jedenfalls nur in einer Drehrichtung des Motors angetrieben wird, während es in der Gegenrichtung blockiert ist. Dank des Umlaufrädergetriebes steht dann die Antriebsleistung des Motors dem bzw. den anderen Aggregat(en) und insbesondere der Brüheinheit zur Verfügung. Der Freilauf ermöglicht also eine selektive Ansteuerung des dem Freilauf nachgelagerten Aggregats allein durch die Auswahl der Drehrichtung des Motors.

Nach einer weiteren vorteilhaften Ausgestaltung der Erfindung kann der Kaffeevollautomat über eine abtriebsseitige Sperre bzw. ein Zweirichtungs-Gesperre zwischen dem Umlaufrädergetriebe und zumindest einem Aggregat verfügen. Als Sperre ist eine Vorrichtung zu verstehen, die nur bei Betätigung und damit unabhängig von einer Drehrichtung der Antriebsseite den Antrieb eines Aggregats blockiert. Damit bietet die Sperre eine drehrichtungsunabhängige Blockade eines Aggregats, die nach den jeweiligen Erfordernissen des Bewegungsablaufs innerhalb des Kaffeevollautomaten mechanisch oder über eine elektrische Steuerung aktivierbar bzw. deaktivierbar ist.

Nach einer weiteren vorteilhaften Ausgestaltung kann im Kaffeevollautomaten mit einer Brüheinheit als einem ersten Aggregat und einem Mahlwerk als einem zweiten Aggregat jenem sowohl ein Freilauf als auch eine Sperre im Antriebsstrang des Mahlwerks vorgelagert sein. Bei jedenfalls nur zwei Aggregaten, nämlich der Brüheinheit einerseits und dem Mahlwerk andererseits, lässt sich so bereits mittels Drehrichtungsänderung das Mahlwerk selektiv ansteuern, wenn die Brüheinheit an einem Anschlag an ihrem Bewegungsende blockiert ist. Um nicht bei jeder Drehrichtungsänderung, die für den Betrieb der Brüheinheit erforderlich ist, auch das Mahlwerk zu aktivieren, lässt sich das Mahlwerk zusätzlich mit Hilfe der Sperre blockieren. Im Zusammenwirken des Umlaufrädergetriebes mit einem Freilauf und nur einer Sperre lässt sich der Antrieb sowohl der Brüheinheit als auch des Mahlwerks trotz ihrer unterschiedlichen Antriebscharakteristiken mit geringstem mechanischen bzw. getriebetechnischen Aufwand bewerkstelligen.

Grundsätzlich kann die Sperre zur Ansteuerung des Mahlwerks über eine elektrische Steuerung betätigt werden. Nach einer weiteren vorteilhaften Ausgestaltung der Erfindung kann der Kaffeevollautomat, der über eine mit der Brühkammer gekoppelte elektrische oder mechanische Ventilsteuerung verfügt, eine ebenso elektrische oder mechanische Kopplung der Ventilsteuerung mit der Steuerung der Sperre aufweisen. Aus der Ventilsteuerung kann folglich ein Steuersignal für die Sperre abgeleitet werden. Damit bietet sich eine konstruktiv einfache und daher kostengünstige Ansteuerung der Sperre, womit die Herstellungskosten des Kaffeevollautomaten gering gehalten werden können.

Nach einer weiteren vorteilhaften Ausgestaltung kann der Kaffeevollautomat auf einer Abtriebsseite bzw. an einem Getriebeausgang des Umlaufrädergetriebes ein Koppelgetriebe zur Drehrichtungsumkehr am Aggregat aufweisen. Koppelgetriebe sind in der Lage, Drehbewegungen z. B. in geradlinige Bewegungen umzuwandeln. Das erfindungsgemäß vorgesehene Koppelgetriebe lässt sich folglich dazu einsetzen, die Drehbewegung des Motors in einer Drehrichtung sowohl in eine Aufwärts- als auch in eine Abwärtsbewegung der Brüheinheit umzusetzen. Damit ist die Änderung der Bewegungsrichtung der Brüheinheit von der Drehrichtung des Motors zumindest phasenweise entkoppelbar. Weil damit für die Brüheinheit nur noch eine Drehrichtung des Motors erforderlich ist, lässt sich eine Ansteuerung der Aggregate bzw. der Brüheinheit einerseits und des Mahlwerks andererseits allein über die Änderung der Motordrehrichtung bewerkstelligen.

Nach einer weiteren vorteilhaften Ausgestaltung der Erfindung kann der Kaffeevollautomat mit zwei Aggregaten und den beiden Aggregaten vorgelagerten Freiläufen über eine Kniehebelbrüheinheit als einem ersten Aggregat und einem Mahlwerk als einem zweiten Aggregat verfügen, wobei das Koppelgetriebe der Kniehebelbrüheinheit vorgelagert ist. Das Koppelgetriebe kann die Aufwärts- und die Abwärtsbewegung beispielsweise über ein Pleuel unmittelbar oder mittelbar über ein nachgeschaltetes Getriebe aus einer Hin- und Herbewegung als Drehung in zwei Richtungen erzeugen. Damit können bekannte Kniehebelbrüheinheiten ohne konstruktive Änderungen mit dem erfindungsgemäßen Umlaufrädergetriebe und dem Koppelgetriebe verbaut werden.

Nach einer alternativen Ausgestaltung der Erfindung kann der Kaffeevollautomat über zwei Aggregate und über zwei den jeweiligen Aggregaten vorgelagerte Freiläufe verfügen, wobei eine Spindelbrüheinheit ein erstes Aggregat und ein Mahlwerk ein zweites Aggregat darstellen und die Spindelbrüheinheit über eine zweigängige Spindel mit einander gegenläufigen Gewindegängen verfügt. Eine zweigängige Gewindespindel stellt eine konstruktiv unaufwändige mechanische Alternative zu einem Koppelgetriebe dar, das sich insbesondere bei Spindelbrüheinheiten anbietet und die Vorteile eines Koppelgetriebes bietet.

Nach einer weiteren vorteilhaften Ausgestaltung der Erfindung kann der Kaffeevollautomat über eine Wasserpumpe, insbesondere eine Zahnradpumpe, eine Türverriegelung und/oder einen Antrieb für eine Tresterschale als zweites oder weiteres Aggregat verfügen. Denn ein Umlaufrädergetriebe kann mehrere Getriebeausgänge bieten, die über Freiläufe und/oder Sperren geeignet angesteuert werden können, so dass sich weitere Aggregate vom Motor antreiben lassen können. Damit kann der Kaffeevollautomat dem Benutzer ohne großen konstruktiven Zusatzaufwand einen erhöhten Komfort bieten, weil er ihm Bedienungstätigkeiten erleichtert oder abnimmt.

Das Prinzip der Erfindung wird anhand einer Zeichnung beispielshalber noch näher erläutert. In der Zeichnung zeigen:
- Figur 1:: eine erste Ausgestaltungsform der Erfindung mit einer Sperre,
- Figur 2:: eine weitere Ausgestaltungsform der Erfindung mit einem Koppelgetriebe.

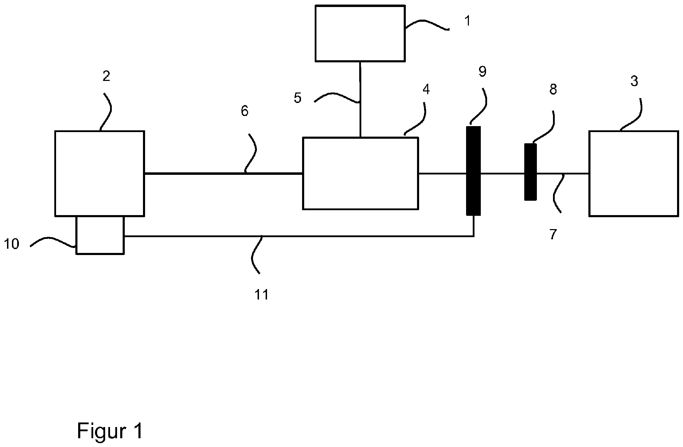

Figur 1 zeigt stark schematisch die erfindungsrelevanten Bestandteile eines Kaffeevollautomaten: dazu zählt ein elektrisch angetriebener Motor 1, der zum Antrieb einer Brüheinheit 2 und eines Mahlwerks 3 im Kaffeevollautomaten dient. Die Herausforderung, beide Aggregate 2, 3 mit demselben Motor bzw. mit derselben Motorwelle 5 anzutreiben, besteht in der unterschiedlichen Antriebscharakteristik der beiden Aggregate 2, 3: Während das Mahlwerk 3 ausschließlich in einer Drehrichtung angetrieben wird, bieten sich bei der Brüheinheit 2 für deren Auf- und Abwärtsbewegung einer nicht dargestellten Brühkammer die beiden Drehrichtungen des Motors 1 als jeweiligen Antrieb an. Erfindungsgemäß ist an der einzigen Motorwelle 5 abtriebsseitig ein Differentialgetriebe 4 als Umlaufrädergetriebe angeordnet, dessen Getriebeeingang die Motorwelle 5 und dessen Getriebeausgänge die Wellen 6 und 7 darstellen. Der abtriebsseitigen Welle 6 ist die Brüheinheit 2 zugeordnet, mit der abtriebsseitigen Welle 7 ist das Mahlwerk 3 gekoppelt. Das Differentialgetriebe 4 fungiert als Verteilergetriebe, weil sich die Motorwelle 5 als Getriebeeingang in zwei Getriebeausgänge, nämlich in die Wellen 6 und 7, verzweigt. Außerdem stellt das Differential 4 ein Winkelgetriebe dar, weil die Motorwelle 5 einerseits und die Wellen 6 und 7 andererseits in einem rechten Winkel zueinander stehen. Auf der Welle 7 ist dem Mahlwerk 3 ein Freilauf 8 vorgelagert, der das Mahlwerk 3 in einer beiden Motordrehrichtungen sperrt bzw. blockiert und in der anderen Motordrehrichtung eine Übertragung des Motordrehmoments vom Differential 4 auf das Mahlwerk 3 zulässt. Der Freilauf 8 kann als in nur einer Drehrichtung wirksames Gesperre mit einer Sperrklinke ausgebildet sein, die eine Drehung der Welle 7 in der einen Drehrichtung sperrt, indem sie in ein Sperrrad mit asymmetrischen Zahnflanken eingreift. In der Gegenrichtung dagegen lässt der Freilauf eine Drehung der Welle 7 und damit den Antrieb des Mahlwerks 3 zu.

Dem Mahlwerk 3 ebenfalls vorgeschaltet liegt auf der Welle 7 eine Sperre 9, die eine Drehung der Welle 7 in der einen wie in der anderen Drehrichtung blockieren kann. Die Sperre 9 kann als Gesperre ausgebildet sein, das in beiden Drehrichtungen betätigbar ist. Die Sperre 9 ist zu ihrer Aktivierung über eine mechanische Kopplung 11 mit einer Ventilsteuerung 10 gekoppelt, die an der Brüheinheit 2 angebracht ist und wie diese über die Welle 6 angetrieben wird.

Während eines Zubereitungsvorgangs ergibt sich der folgende Ablauf: Nach einem vorangegangenen und abgeschlossenen Brühvorgang wird der Motor 1 zunächst im Rechtslauf angetrieben. Das Mahlwerk 3 lässt sich dank des Freilaufs 8 nur im Rechtslauf betreiben. Da die Brühkammer durch einen Rechtslauf des Motors 1 abwärtsverfahren wird, und ein vorangegangener Zubereitungsvorgang bereits abgeschlossen ist, befindet sie sich jetzt in ihrer abgesenkten Stellung an einem nicht dargestellten Gehäuseanschlag. Sie kann nicht weiter abwärtsverfahren werden, so dass die Welle 6 durch die Brüheinheit 2 gesperrt ist. Die gesamte Antriebsenergie des Motors 1 steht daher an der Welle 7 und damit für das Mahlwerk 3 zur Verfügung.

Nach Abschluss des Mahlvorgangs stoppt der Motor 1, um seine Drehrichtung zu ändern. Im Linkslauf sperrt der Freilauf 8 die Welle 7, so dass das Mahlwerk 3 kein Drehmoment abbekommt. Stattdessen wird die Brüheinheit 2 über die Welle 6 angetrieben und verfährt die Brühkammer aufwärts. Mit dem Antrieb der Brüheinheit 2 über die Welle 6 wird auch deren Ventilsteuerung 10 angetrieben. Über deren mechanische Kopplung 11 mit der Sperre 9 sorgt sie dafür, dass die Sperre 9 vor Erreichen der oberen Position der Brühkammer aktiviert wird. Der Motor 1 dreht im Linkslauf weiter, bis die Brüheinheit 2 an einem nicht dargestellten oberen Anschlag angekommen ist, um Kaffee zu brühen.

Ist der Zubereitungsabschnitt abgeschlossen, stoppt der Motor 1, um seine Drehrichtung erneut zu ändern. Im Rechtslauf treibt er über die Welle 6 wiederum die Brüheinheit 2 an, die die Brühkammer nun abwärts verfährt. Zwar böte der Freilauf 8 im Rechtslauf eine mechanische Kopplung des Mahlwerks 3 mit dem Differential 4 bzw. dem Motor 1, jedoch sperrt die aktivierte Sperre 9 die Welle 7, so dass das Mahlwerk 3 inaktiv bleibt. Der Motor 1 behält seinen Rechtslauf bei, bis die Brüheinheit 2 ihre Brühkammer in die untere Position verfahren hat und dort ihren Anschlag erreicht hat. Gleichzeitig löst die Ventilsteuerung 10 die Sperre 9, damit bei einem anschließenden Zubereitungsvorgang und einem ihn einleitenden Rechtslauf das Mahlwerk 3 vom Motor 1 angetrieben werden kann.

Damit lassen sich auch zwei in ihrer Ansteuerung so unterschiedliche Aggregate wie Brüheinheit 2 einerseits und das Mahlwerk 3 andererseits mit verhältnismäßig geringem Aufwand von derselben Motorwelle 5 antreiben, ohne dass es einer aufwändigen, insbesondere elektrischen Steuerung bedürfte.

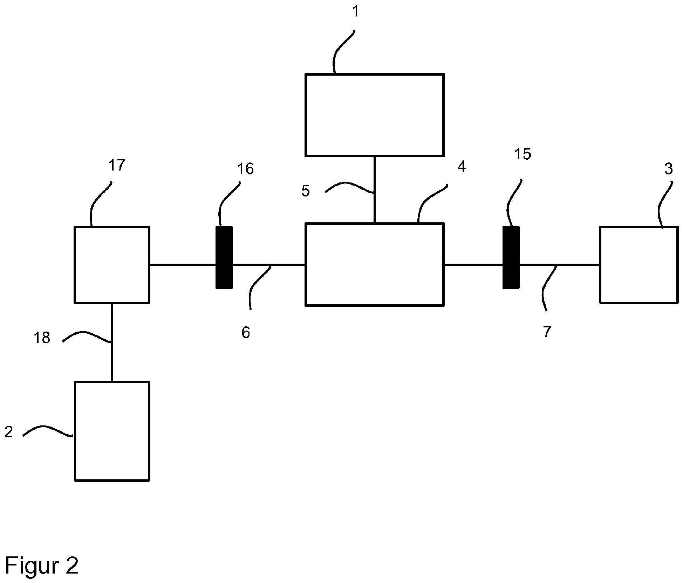

Eine alternative Ausgestaltungsform zeigt Figur 2. Auch sie gibt als wesentliche Bestandteile des Kaffeevollautomaten einen Motor 1, eine Brüheinheit 2 und ein Mahlwerk 3 stark schematisiert wieder, die über Getriebewellen 6, 7 von einem Differential 4 angetrieben werden, das seinerseits wiederum an der Motorwelle 5 unmittelbar und starr gekoppelt ist.

Abweichend von der Darstellung gemäß Figur 1 umfasst der Aufbau gemäß Figur 2 jeweils einen Freilauf 15, 16 auf der Welle 7 bzw. 6. Hinsichtlich seines Aufbaus und seiner technischen Funktion entspricht jeder Freilauf 15, 16 dem Freilauf 8 gemäß Figur 1. Ein weiterer Unterschied besteht darin, dass zwischen dem Getriebe 4 und der Brüheinheit 2 nicht nur der Freilauf 16, sondern auch ein Koppelgetriebe 17 angeordnet ist. Das Koppelgetriebe 17 wandelt die Drehbewegung der Welle 6 in eine geradlinige Bewegung um, die sie über eine Koppel 18 auf die Brüheinheit 2 überträgt.

Die beiden Freiläufe 15, 16 sperren in unterschiedlichen Drehrichtungen des Motors 1 und sorgen damit dafür, dass die Aggregate 2, 3 drehrichtungsabhängig angesteuert werden können, also in einer ersten Drehrichtung die Brüheinheit 2 und in einer entgegengesetzten anderen Drehrichtung das Mahlwerk 3.

Bei einem Zubereitungsvorgang dreht der Motor 1 beispielsweise zunächst im Rechtslauf. In dieser Drehrichtung sperrt der Freilauf 16 die Welle 6, weshalb das Drehmoment vollständig an der Welle 7 anliegt und daher für das Mahlwerk 3 zur Verfügung steht. Nach Abschluss des Mahlvorgangs stoppt der Motor 1, um seine Drehrichtung zu ändern. Jetzt sperrt der Freilauf 15 die Welle 7 und damit das Mahlwerk 3, so dass das Drehmoment des Motors 1 vollständig an der Welle 6 anliegt und der Brüheinheit 2 zur Verfügung steht. Im Linkslauf fährt die Brüheinheit 2 zunächst die Brühkammer nach oben. Ist die obere Position erreicht, erfasst sie dort ein nicht dargestellter mechanischer oder elektrischer Sensor und stoppt den Motor 1, damit der Kaffeebrühvorgang stattfinden kann. Anschließend dreht der Motor 1 weiterhin im Linkslauf und gibt sein Drehmoment an die Welle 6 ab. Das zwischen dem Differential 4 und der Brüheinheit 2 zwischengeschaltete Koppelgetriebe ist nun so ausgelegt und auf die Brüheinheit 2 abgestimmt, dass eine weitere Drehung des Motors 1 im Linkslauf über das Koppelgetriebe 17 statt in einer Aufwärtsbewegung nun in eine Abwärtsbewegung der Brühkammer mechanisch umgesetzt wird. Der fortgesetzte Linkslauf des Motors 1 nun sorgt dafür, dass die Brühkammer innerhalb der Brüheinheit 2 abwärts fährt, bis sie ihre untere Position erreicht hat. Dort erfasst sie ein weiterer Sensor, der den Motor 1 stoppt. Jetzt befindet sich die Brüheinheit 2 wieder im Ausgangszustand, so dass ein neuer Brühvorgang durch Rechtslauf des Motors 1 eingeleitet werden kann.

Das Koppelgetriebe 17 ermöglicht also die Ansteuerung der beiden Aggregate 2, 3 in Abhängigkeit von der Drehrichtung des Motors 1, weil es die Auf- und Abwärtsbewegung innerhalb der Brüheinheit 2 aus derselben Drehrichtung des Motors 1 ableiten kann. Weil nun der Motor 1 zum Betrieb der Brüheinheit 2 ausschließlich im Linkslauf dreht, kann in der Ausführungsform gemäß Figur 2 eine Sperre, vergleichbar der Sperre 9 gemäß Figur 1, und deren Ansteuerung entfallen.

Da es sich bei den vorhergehenden, detailliert beschriebenen Getriebekonfigurationen um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen des Koppelgetriebes in anderer Form als in der hier beschriebenen folgen. Ebenso kann das Differential in einer anderen Form, insbesondere als Planetengetriebe ausgestaltet werden, wenn dies zum Beispiel aus Platzgründen notwendig ist. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Motor
- 2: Brüheinheit
- 3: Mahlwerk
- 4: Differential
- 5: Motorwelle
- 6: Getriebewelle
- 7: Getriebewelle
- 8: Freilauf
- 9: Sperre
- 10: Ventilsteuerung
- 11: Koppelung
- 15: Freilauf
- 16: Freilauf
- 17: Koppelgetriebe
- 18: Koppel

## Patentansprüche

1. Kaffeevollautomat für Haushaltszwecke mit einer Brüheinheit (2) als einem ersten Aggregat, mit mindestens einem weiteren Aggregat, vorzugsweise einem Mahlwerk (3), mit einem Motor (1) und mit einem Umlaufrädergetriebe (4) zum Verteilen der Antriebsenergie des Motors (1) auf die Aggregate (2; 3), mit genau einem Getriebeeingang und mindestens zwei Getriebeausgängen (6; 7) des Umlaufrädergetriebes (4), dessen Getriebeeingang starr mit der einzigen Welle (5) des Motors (1) und dessen Getriebeausgänge (6; 7) jeweils mit einem Aggregat (2; 3) gekoppelt sind, und mit einem Freilauf (8; 15; 16) zwischen dem Umlaufrädergetriebe (4) und einem Aggregat (2; 3), **gekennzeichnet durch**
- eine Sperre (9) zwischen dem Umlaufrädergetriebe (4) und dem Aggregat (3), oder
- ein Koppelgetriebe (17) auf einer Abtriebsseite an einem Getriebeausgang (6) des Umlaufrädergetriebes (4) zur Drehrichtungsumkehr, oder
- mit einer Spindelbrüheinheit als einem ersten Aggregat, mit einem Mahlwerk als einem zweiten Aggregat, mit den beiden Aggregaten vorgelagerten Freiläufen und mit einer zweigängigen Spindel mit einander gegenläufigen Gewindegängen.

2. Kaffeevollautomat nach Anspruch 1 mit einem Mahlwerk (3) als zweiten Aggregat, **gekennzeichnet durch** den dem Mahlwerk (3) vorgelagerten Freilauf (8) und der dem Mahlwerk (3) vorgelagerten Sperre (9).

3. Kaffeevollautomat nach Anspruch 2 mit einer mit der Brüheinheit (2) gekoppelten Ventilsteuerung (10), **gekennzeichnet durch** eine Koppelung (11) der Ventilsteuerung (10) mit der Steuerung der Sperre (9).

4. Kaffeevollautomat nach Anspruch 1 mit zwei Aggregaten (2; 3) und mit den beiden Aggregaten (2; 3) vorgelagerten Freiläufen (15; 16), **gekennzeichnet durch** eine Kniehebelbrüheinheit (2) als einem ersten Aggregat und durch ein Mahlwerk (3) als einem zweiten Aggregat und durch das der Kniehebelbrüheinheit (2) vorgelagertes Koppelgetriebe (17).

5. Kaffeevollautomat nach einem der obigen Ansprüche, **gekennzeichnet durch** eine Wasserpumpe (Zahnradpumpe), eine Türverriegelung und/oder einen Antrieb für eine Tresterschale als zweitem oder weiterem Aggregat.

## Claims

1. Fully automatic coffee machine for household purposes with a brewing unit (2) as a first assembly, with at least one further assembly, preferably a grinder (3), with a motor (1) and with a planetary wheel drive (4) for distributing the drive energy of the motor (1) to the assemblies (2; 3), with precisely one gear input and at least two gear outputs (6; 7) of the planetary wheel drive (4), the gear input of which is rigidly connected to the single shaft (5) of the motor (1) and the gear outputs (6; 7) of which are coupled to an assembly (2; 3) in each case, and with a free-wheel (8; 15; 16) between the planetary wheel drive (4) and an assembly (2; 3), **characterised by**
- a barrier (9) between the planetary wheel drive (4) and the assembly (3), or
- a coupling gear (17) on an output side at a gear output (6) of the planetary wheel gear (4) for reversing the direction of rotation, or
- with a spindle brewing unit as a first assembly, with a grinder as a second assembly, with free-wheels arranged upstream of the two assemblies and with a double-threaded spindle with opposing thread paths.

2. Fully automatic coffee machine according to claim 1 with a grinder (3) as a second assembly, **characterised by** the free-wheel (8) arranged upstream of the grinder (3) and the barrier (9) arranged upstream of the grinder (3).

3. Fully automatic coffee machine according to claim 2 with a valve controller (10), coupled to the brewing unit (2), **characterised by** a coupling (11) of the valve controller (10) with the controller of the barrier (9).

4. Fully automatic coffee machine according to claim 1 with two assemblies (2; 3), and with free-wheels (15; 16) arranged upstream of the two assemblies (2; 3), **characterised by** a toggle lever brewing unit (2) as a first assembly and by a grinder (3) as a second assembly and by the coupling gear (17) arranged upstream of the toggle lever brewing unit (2).

5. Fully automatic coffee machine according to one of the above claims, **characterised by** a water pump (toothed wheel pump), a door lock and/or a drive for a used coffee tray as a second or further assembly.

## Revendications

1. Machine à café entièrement automatique à but ménager dotée d'une unité de percolation (2) comme un premier appareil, avec au moins un autre appareil, de préférence un moulin broyeur (3), d'un moteur (1) et d'une transmission épicycloïdale (4) qui distribue l'énergie d'entraînement du moteur (1) aux appareils (2; 3), avec exactement une entrée de transmission et au moins deux sorties de transmission (6; 7) de la transmission épicycloïdale (4), dont l'entrée de transmission est accouplée de manière rigide à l'arbre (5) unique du moteur (1) et dont la sortie de transmission (6; 7) est respectivement accouplée à un appareil (2; 3), et d'une marche à vide (8; 15; 16) entre la transmission épicycloïdale (4) et un appareil (2; 3), **caractérisée par**
- un dispositif de blocage (9) entre la transmission épicycloïdale (4) et l'appareil (3), ou
- un engrenage accouplé (17) côté sortie sur une sortie de transmission (6) de la transmission épicycloïdale (4) pour l'inversion du sens de rotation, ou
- une unité de percolation à broche comme un premier appareil, un moulin broyeur comme un deuxième appareil, des marches à vide en amont des deux appareils et une broche à double filet présentant des pas de filet à mouvement opposé.

2. Machine à café entièrement automatique selon la revendication 1 avec un moulin broyeur (3) comme deuxième appareil, **caractérisée par** la marche à vide (8) en amont du moulin broyeur (3) et le dispositif de blocage (9) en amont du moulin broyeur (3).

3. Machine à café entièrement automatique selon la revendication 2 avec une commande de vanne (10) couplée à l'unité de percolation (2), **caractérisée par** un accouplement (11) de la commande de vanne (10) avec la commande du dispositif de blocage (9).

4. Machine à café entièrement automatique selon la revendication 1 avec deux appareils (2; 3) et les marches à vide (15; 16) en amont des deux appareils (2; 3), **caractérisée par** une unité de percolation à levier coudé (2) comme un premier appareil et par un moulin broyeur (3) comme un deuxième appareil et par la transmission de couplage (17) en amont de l'unité de percolation à levier coudé (2).

5. Machine à café entièrement automatique selon l'une des revendications précédentes, **caractérisée par** une pompe à eau (pompe à engrenages), un verrouillage de porte et/ou un entraînement pour un bac de marc comme deuxième ou autre appareil.
